(19) Europäisches Patentamt
European Patent Office
Office européen des brevets

(11) **EP 2 673 610 B1**

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(21) Anmeldenummer: **11784407.6**

(22) Anmeldetag: **08.11.2011**

(51) Int Cl.:
**G01M 13/00** *(2006.01)*  **G01M 17/007** *(2006.01)*
**G01M 1/10** *(2006.01)*

(86) Internationale Anmeldenummer:
**PCT/AT2011/000449**

(87) Internationale Veröffentlichungsnummer:
**WO 2012/106737 (16.08.2012 Gazette 2012/33)**

(54) **VERFAHREN UND VORRICHTUNG ZUR SIMULATION EINES TRANSLATORISCH ODER ROTATORISCH BEWEGTEN KÖRPERS**

METHOD AND DEVICE FOR SIMULATING A BODY THAT IS MOVED IN A TRANSLATIONAL OR ROTATIONAL MANNER

PROCÉDÉ ET DISPOSITIF DE SIMULATION D'UN CORPS DÉPLACÉ PAR TRANSLATION OU PAR ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.02.2011 AT 1722011**

(43) Veröffentlichungstag der Anmeldung:
**18.12.2013 Patentblatt 2013/51**

(73) Patentinhaber: **Kristl, Seibt & Co. Gesellschaft m.b.H.**
**8052 Graz (AT)**

(72) Erfinder:
• **BAUER, Robert**
**A-8041 Graz (AT)**

• **ETTL, Wolfgang**
**A-8010 Graz (AT)**
• **GRITSCH, Christian**
**A-8451 Heimschuh (AT)**
• **WASTIAN, Michael**
**A-8504 Preding (AT)**

(74) Vertreter: **Sonn & Partner Patentanwälte**
**Riemergasse 14**
**1010 Wien (AT)**

(56) Entgegenhaltungen:
**DE-A1- 3 423 694    DE-B3-102005 004 632**
**US-A- 4 161 116**

EP 2 673 610 B1

**Beschreibung**

Die Erfindung betrifft ein Verfahren zur Simulation eines translatorisch oder rotatorisch bewegten Körpers, wobei eine am Körper wirkende Kraft bzw. ein am Körper wirkendes Drehmoment erfasst wird und dem Körper eine Soll-Masse bzw. ein Soll-Trägheitsmoment zugeordnet wird, wobei die Kraft bzw. das Drehmoment und die Soll-Masse bzw. das Soll-Trägheitsmoment zur Bestimmung einer Sollgeschwindigkeit für eine Geschwindigkeitsregelung herangezogen werden, welche eine Istgeschwindigkeit mit einer Regel-Übertragungsfunktion regelt.

Die Erfindung betrifft weiters eine Vorrichtung zur Simulation eines translatorisch oder rotatorisch bewegbaren Körpers, mit einer Messeinrichtung zum Messen einer am Körper wirkenden Kraft bzw. eines am Körper wirkenden Drehmoments, die mit einer Rechenvorrichtung verbunden ist, welche dazu eingerichtet ist, aus der gemessenen Kraft bzw. Drehmoment und einer dem Körper zugeordneten Soll-Masse bzw. Soll-Trägheitsmoment eine Sollgeschwindigkeit für eine Geschwindigkeitsregeleinrichtung zu liefern, die einen Regler mit einer Regel-Übertragungsfunktion zum Regeln einer Istgeschwindigkeit aufweist.

Ein solches Verfahren zur Simulation einer Schwungmasse ist beispielsweise aus der US 4,161,116 in Verbindung mit einem Rollenprüfstand zum Testen eines Kraftfahrzeugs bekannt. Der Rollenprüfstand weist eine ein Fahrzeugrad lagernde Rolle auf, die mit einer Drehmoment-Messeinrichtung verbunden ist, welche das gemessene Drehmoment an einen Computer liefert. Zur Simulation des Trägheitsmoments des Fahrzeugs ist eine Prüfmasse vorgesehen, die durch ein mit einem Antrieb gekoppeltes Schwungrad gebildet ist. Da das getestete Fahrzeug ein höheres oder ein niedrigeres Trägheitsmoment als die Prüfmasse aufweisen kann, wird die Drehzahl des Antriebs in Abhängigkeit vom gemessenen Drehmoment geregelt.

Demnach wird die Abweichung zwischen der Prüfmasse und dem zu simulierenden System durch eine entsprechende Geschwindigkeitsregelung der Belastungsmaschine berücksichtigt. Dieses im Stand der Technik weit verbreitete Verfahren zur Simulation der Schwungmasse weist jedoch den Nachteil auf, dass das dynamische Verhalten der Prüfmasse durch die Geschwindigkeitsregelung beeinflusst wird; die Geschwindigkeitsregelung weist eine Dynamik auf, welche die Simulation des Fahrzeugs verfälscht. Der Einfluss der Geschwindigkeitsregelung auf den Simulationsvorgang besteht insbesondere darin, dass die mit der Prüfmasse simulierte Dynamik gegenüber jener des realen Systems verzögert wird, d.h. die Prüfmasse "hinkt" dem realen System hinterher. Somit weist die Simulation dynamischer Vorgänge Fehler auf, welche für eine realitätsnahe Nachbildung des Fahrzeugverhaltens vermieden werden sollen. Unter bestimmten Prüfbedingungen kann die Eigendynamik der Geschwindigkeitsregelung zudem Instabilitäten im Simulationsprozess verursachen, welche beim realen System nicht auftreten würden. Somit weist die bekannte Schwungmassensimulation mit Drehzahlregelung ein eingeschränktes Anwendungsspektrum auf.

Aus der DE 34 23 694 A1 ist zudem ein Fahrzeugdynamometer bekannt, bei dem ein Dynamo ausgehend von Messungen eines Drehmomentmessers und eines Drehzahlmessers geregelt wird. Der Drehmomentmesser befindet sich dabei auf der einer Rolle gegenüberliegenden Seite eines Schwungrades. Um die "Verfälschung" des gemessenen Drehmoments gegenüber dem Drehmoment an der Rolle durch das Schwungrad zu kompensieren, wird die vom Dynamo 3 zur Zeit $t + \Delta T$ zu absorbierende Kraft $F_{PAU}$ in Abhängigkeit von den Trägheitseigenschaften des Dynamos und eines Schwungrades, den geschwindigkeitsabhängigen Reibungskräften sowie dem gemessenen Drehmoment und der gemessenen Drehzahl kompensiert.

Aus DE 10 2005 004 632 B3 ist zudem ein Verfahren zum Regeln eines dynamischen Systems, inbesonder einer Reaktortemperatur bzw. einer Produktkonzentration sowie die Regelung der Spurführung eines Straßenfahrzeugs bekannt, wobei die Regelstruktur ein invertiertes nominales Modell $1/G_n$ des zu steuernden Prozesses G umfasst, welches durch ein Korrektursignal an ein reales Modell angepasst wird.

Die US 4,161,116 offenbart weiters ein Verfahren u.a. zur Simulation der Trägheit eines Fahrzeugs. Hierfür wird die Drehzahl und das Drehmoment an einer Verbindung zwischen einem Fahrzeug und einem Schwungrad gemessen. Zur Simulation eines von der Prüfmasse abweichenden Trägheitsmoments ist das Schwungrad mit einem Antrieb gekoppelt, dessen Drehzahl in Abhängigkeit von den gemessenen Werten geregelt wird.

In der DE 33 47 182 A1 ist ein weiteres Verfahren zur Schwungmassensimulation bei Prüfständen offenbart, bei welchem ein Prüfling, beispielsweise eine Verbrennungskraftmaschine, starr mit einer elektrischen Gleichstrommaschine gekoppelt wird, welche die Last simuliert. Das mechanische Moment des Prüflings wird durch einen Messgeber erfasst. Aus dem gemessenen Moment wird mit dem geforderten Trägheitsmoment eine Sollbeschleunigung der elektrischen Maschine ermittelt. Die Sollbeschleunigung wird mit einer Istbeschleunigung verglichen, welche aus den erfassten Änderungen der Drehzahl der Maschine berechnet wird. In Abhängigkeit von dieser Differenz wird das Moment der elektrischen Maschine nachgeregelt. Zur Bestimmung der Sollbeschleunigung der Maschine wird das mechanische Moment des Prüflings an einen Glättungsbaustein geliefert. Anschließend wird durch Division mit dem gewünschten Trägheitsmoment ein Wert gebildet, welcher der erforderlichen Sollbeschleunigung der Maschine entspricht. Dieses Verfahren lässt sich ebenfalls auf eine Drehzahlregelung der Gleichstrommaschine zurückführen, welche die im Zusammenhang mit der US 4,161,116 erläuterten Nachteile aufweist, die auch durch den Glättungsbaustein nicht behoben werden können.

Aus der DE 44 27 966 A1 ist ein andersartiges Verfahren zur Massensimulation auf ortsfesten Prüfständen bekannt, wobei eine mit einem Prüfling verbundene Belastungseinrichtung geregelt wird. Aus der Istgeschwindigkeit wird durch Differentiation in einem Differenzierglied und Dämpfung in einem gesteuerten Zeitglied ein Drehmoment-Sollwert abgeleitet. Der Drehmoment-Sollwert wird durch einen Regler mit einem durch einen Drehmomentaufnehmer ermittelten Drehmoment-Istwert verglichen. Bei einer Abweichung zwischen Drehmoment-Sollwert und Drehmoment-Istwert wird ein Korrekturmoment gebildet. Das Zeitglied bestimmt eine Zeitkon stante, welche zu einem variablen Massenträgheitsmoment des Prüflings bzw. der Prüfeinrichtung proportional ist. Diese Ausführung soll einer Instabilität des Regelkreises vorbeugen.

Demgegenüber besteht die Aufgabe der vorliegenden Erfindung darin, ein einfach zu implementierendes, stabiles Verfahren der eingangs angeführten Art zu schaffen, bei welchem der Einfluss der Drehzahlregelung auf das dynamische Verhalten des rotatorisch bzw. translatorisch bewegten Körpers eliminiert bzw. zumindest beträchtlich reduziert wird. Zudem soll eine konstruktiv einfache Vorrichtung der eingangs angeführten Art geschaffen werden, mit welcher eine präzise Simulation des dynamischen Verhaltens eines bewegten Körpers ermöglicht wird.

Dies wird beim Verfahren der eingangs angeführten Art dadurch erzielt, dass die Sollgeschwindigkeit mittels eines Übertragungsgliedes mit einer zur Regel-Übertragungsfunktion reziprok proportionalen Übertragungsfunktion bestimmt wird.

Zur Nachbildung des dynamischen Verhaltens eines rotierenden Körpers wird demnach ein Soll-Trägheitsmoment vorgegeben, welches vom verfügbaren Trägheitsmoment des rotierenden Körpers verschieden sein kann. Die Differenz zwischen dem vorgegebenen Soll-Trägheitsmoment und dem verfügbaren Trägheitsmoment wird mittels einer Geschwindigkeitsregelung für den rotierenden Körper ausgeglichen. Die Geschwindigkeitsregelung erhält als Eingangsgröße eine Sollgeschwindigkeit, die aus dem Drehmoment des rotierenden Körpers und dem Soll-Trägheitsmoment bestimmt wird. Die Funktion der Geschwindigkeitsregelung wird regelungstechnisch durch eine komplexe Übertragungsfunktion beschrieben, welche als Verhältnis zwischen Ausgangsverhalten und Eingangsverhalten der jeweiligen Regelstrecke, d.h. zwischen Soll- und Istgeschwindigkeit des rotierenden Körpers, definiert ist. Um den störenden Einfluss der Geschwindigkeitsregelung auf die Simulation des dynamischen Verhaltens des rotierenden Körpers zu eliminieren, weist das Übertragungsglied zur Bestimmung der Sollgeschwindigkeit eine zur Regel-Übertragungsfunktion reziprok bzw. indirekt proportionale Übertragungsfunktion auf. Das Übertragungsglied weist daher eine zur Eigendynamik der Geschwindigkeitsregelung gegengleiche Dynamik auf, so dass der Simulationsprozess insgesamt vom Einfluss der Geschwindigkeitsregelung entkoppelt wird. Somit kann das durch die Geschwindigkeitsregelung in den Gesamtregelkreis eingeführte Zeitverhalten durch das vorgeschaltete Übertragungsglied kompensiert werden. Dies hat gegenüber den bekannten Simulationsverfahren den Vorteil, dass der rotierende Körper ein vom verfügbaren Trägheitsmoment abweichendes Soll-Trägheitsmoment simulieren kann, ohne dass zwischen dem dynamischen Verhalten des untersuchten Körpers und jenem des simulierten Systems eine Zeitverzögerung entstünde. Das bei bekannten Massensimulationen auftretende Problem, dass das simulierte dynamische Verhalten dem realen Verhalten hinterherläuft, kann dabei zuverlässig vermieden werden. Somit kann eine besonders genau arbeitende Schwungmassensimulation durchgeführt werden, welche insbesondere dann von Vorteil ist, wenn mit dem rotierenden Körper die Eigenschaften eines hiervon verschiedenen Systems untersucht werden sollen, das selbst keiner Untersuchung unterzogen wird. Die obigen Erläuterungen gelten entsprechend für die Simulation translatorisch bewegter Körper, wobei lediglich die korrespondierenden physikalischen Größen, speziell Kraft, Masse und Geschwindigkeit, einzusetzen sind. Wenn nachstehend Merkmale der Erfindung für die Simulation von rotatorisch bewegten Körpern erläutert werden, so soll selbstverständlich der Fall translatorisch bewegter Körper mitumfasst sein, für den - abgesehen von der Verwendung der korrespondierenden Größen - analoge Überlegungen gelten.

Zur Kompensation der Dynamik der Geschwindigkeitsregelung im Regelsystem ist es von Vorteil, wenn das Übertragungsglied zur Bestimmung der Sollgeschwindigkeit ein Integrierglied und ein zur Regel-Übertragungsfunktion inverses Kompensationsglied aufweist. Das am rotierenden Körper wirkende Drehmoment, welches sich je nach Ausführung aus verschiedenen Anteilen zusammensetzen kann, steht über den Drehimpulserhaltungssatz bzw. Drallsatz mit der Winkelbeschleunigung in Beziehung; im Fall translatorisch bewegter Körper wäre analog der Impulssatz anzuwenden. Im Integrierglied wird die (Winkel-)Geschwindigkeit durch Integration der (Winkel-)Beschleunigung bestimmt. Das Verfahren zur Bestimmung der Geschwindigkeit aus dem gemessenen Drehmoment unter Verwendung des Drallsatzes wird jedoch dahingehend erweitert, dass das Integrierglied mit einem Kompensationsglied gekoppelt wird, welches ein zur Regel-Übertragungsfunktion inverses Übertragungsverhalten aufweist, so dass die Dynamik der Geschwindigkeitsregelung bei einer Gesamtbetrachtung des Regelkreises kompensiert wird. Selbstverständlich kann das Integrationsglied - ebenso wie die übrigen Komponenten des Regelkreises - zur Summation zeitdiskreter Werte eingerichtet sein.

Um die Dynamik der Drehzahl- bzw. Geschwindigkeitsregelung im Übertragungsglied zu kompensieren, ist es günstig, wenn die Sollgeschwindigkeit mittels einer zu einer Regel-Übertragungsfunktion n. Grades, insbesondere 1. Grades oder 2. Grades, reziprok proportionalen Übertragungsfunktion bestimmt wird.

Bei einer besonders bevorzugten Ausführung, welche die Verwendung von Standardkomponenten erlaubt, ist vorgesehen, dass die Übertragungsfunktion des Übertragungsgliedes im Wesentlichen jener eines PI-Reglers entspricht.

Ein solcher PI-Regler setzt sich in bekannter Weise aus den Anteilen eines (proportionalen) P-Gliedes und eines (integrierenden) I-Gliedes mit einer bestimmten Zeitkonstante zusammen.

Zur Simulation eines translatorisch oder rotatorisch bewegten Körpers ist es von Vorteil, wenn der Körper durch eine Belastungsmaschine zur Nachbildung des dynamischen Verhaltens eines Maschinenelements, insbesondere einer Schwungmasse, gebildet wird. Die Belastungsmaschine simuliert das Verhalten des Maschinenelements, welches durch die Belastungsmaschine ersetzt werden kann. Die Belastungsmaschine kann dabei ein von dem zu simulierenden Maschinenelement abweichendes Trägheitsmoment aufweisen. Dies ist beispielsweise dann der Fall, wenn das Trägheitsmoment des zu simulierenden Maschinenelements sehr hoch ist, so dass eine Belastungsmaschine mit passendem Trägheitsmoment das für die Simulation erforderliche Drehmoment nicht aufbringen könnte.

Zur Erzielung einer präzise arbeitenden Drehzahl- bzw. Geschwindigkeitsregelung ist es günstig, wenn bei der Drehzahlregelung eine Störgrößenaufschaltung vorgenommen wird.

Die der Erfindung zugrundeliegende Aufgabe wird zudem durch eine Vorrichtung der eingangs angeführten Art gelöst, bei welcher die Rechenvorrichtung zur Bestimmung der Sollgeschwindigkeit ein Übertragungsglied mit einer zur Regel-Übertragungsfunktion reziprok proportionalen Übertragungsfunktion aufweist. Hierdurch können dieselben Vorteile und technischen Effekte wie beim erfindungsgemäßen Verfahren erzielt werden, so dass auf vorstehende Erläuterungen verwiesen wird.

Bei einer besonders bevorzugten Ausführungsvariante ist vorgesehen, dass als Körper eine zur Nachbildung des dynamischen Verhaltens eines Maschinenelements, insbesondere einer Schwungmasse, eingerichtete Belastungsmaschine vorgesehen ist. Die Vorrichtung ist insbesondere Teil eines Prüfstands, welcher im Stand der Technik in verschiedensten Ausführungen, insbesondere als Rollenprüfstand oder Radprüfstand, bekannt ist.

Die Erfindung wird nachstehend anhand eines in den Figuren dargestellten Ausführungsbeispiels, auf das sie jedoch nicht beschränkt sein soll, noch weiter erläutert.

Im Einzelnen zeigen in der Zeichnung:

Fig. 1 eine schematische Ansicht einer Schwungmasse, deren dynamisches Verhalten simuliert wird;

Fig. 2 eine schematische Ansicht einer Belastungsmaschine, welche die in Fig. 1 gezeigte Schwungmasse simuliert; und

Fig. 3 schematisch einen Regelkreis gemäß einer bevorzugten Ausführungsform der Erfindung, mit einer Geschwindigkeitsregelung für die Belastungsmaschine und einem ein Kompensationsglied aufweisenden Übertragungsglied zur Kompensation der Dynamik der Geschwindigkeitsregelung.

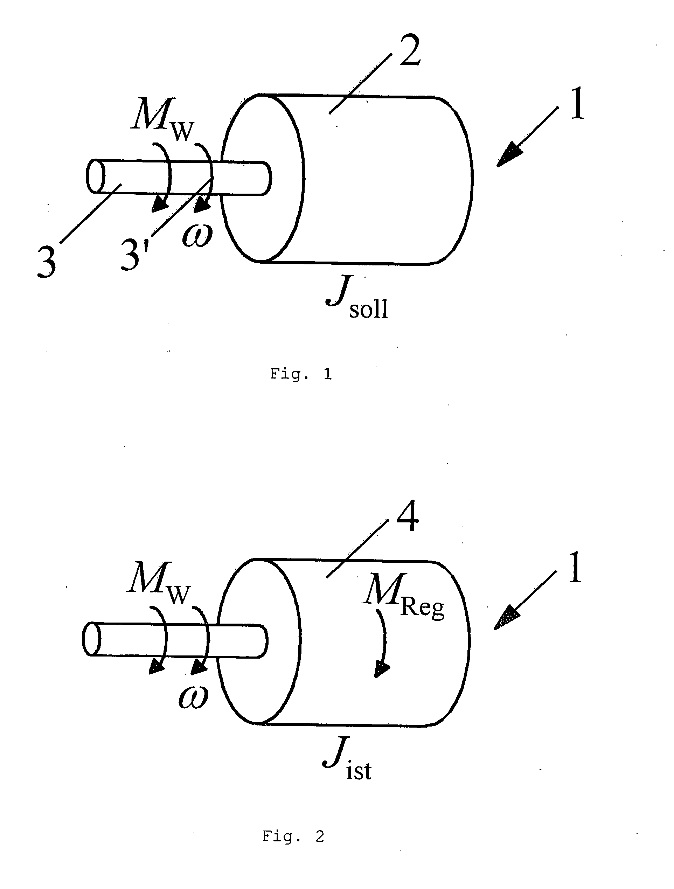

In Fig. 1 ist ein rotatorisch bewegter Körper 1 gezeigt, der eine Schwungmasse 2 mit einem (Soll-) Trägheitsmoment $J_{soll}$ aufweist. Die Schwungmasse 2 ist mit einer Welle 3 verbunden, an welcher ein Drehmoment $M_W$ aufgebracht wird, das eine Rotation der Schwungmasse 2 in Pfeilrichtung 3' mit einer (Winkel-)Geschwindigkeit $\omega$ hervorruft. Der Drallsatz bzw. Drehimpulserhaltungssatz liefert die in Gleichung (1) wiedergegebene Beziehung zwischen dem Drehmoment $M_W$ und der (Winkel-)Beschleunigung.

$$J_{soll}\frac{d\omega}{dt}=M_W \qquad\qquad (1)$$

Gleichung (1) stellt die Grundlage jeder Schwungmassensimulation dar, bei welcher aus dem gemessenen Drehmoment $M_W$ und dem Soll-Trägheitsmoment $J_{soll}$ eine Geschwindigkeit $\omega$ hergeleitet wird. Dies wird durch Umformung und Integration von Gleichung (1) erzielt, woraus sich bei bekanntem Trägheitsmoment $J_{soll}$ die Geschwindigkeit $\omega$ ergibt. Der Übergang zwischen dem Drehmoment $M_W$ und der Geschwindigkeit $\omega$ kann in bekannter Weise durch eine Soll-Übertragungsfunktion $T_{soll}(s)$ mit der komplexen Variablen s beschrieben werden, vgl. Gleichung (2), welche das reale Verhalten der Schwungmasse 2 angibt, das in der Simulation möglichst exakt nachgebildet werden soll.

$$T_{soll}(s)=\frac{\omega(s)}{M_W(s)}=\frac{1}{J_{soll}\,s} \qquad\qquad (2)$$

Je nach Ausführung des simulierten Systems können am rotatorisch bewegten Körper 1 zusätzliche Momente wirken, welche mit entsprechenden, im Stand der Technik bekannten Prüfständen untersucht werden, wie nachstehend anhand von zwei Beispielen erläutert wird.

Um das Verhalten eines Fahrzeugs unter Berücksichtigung von Reibung und Luftwiderstand zu simulieren, können im Stand der Technik bekannte Rollenprüfstände verwendet werden. Hierfür wird der in Gleichung (1) für den Fall eines Maschinenelements mit einem (Wellen-)Moment $M_W$ angegebene Drallsatz zu Gleichung (3) erweitert, worin $J_v$ das Trägheitsmoment des Fahrzeugs und $M_{RL}$ ein dem Fahrwiderstand entsprechendes Moment bezeichnet.

$$J_v \frac{d\omega}{dt} = M_W - M_{RL} \qquad (3)$$

Das Moment $M_{RL}$ ist gemäß Gleichung (4) mit den Koeffizienten A, B, C für Reibung und Luftwiderstand als Funktion der Winkelgeschwindigkeit gegeben.

$$M_{RL} = A + B\omega + C\omega^n \qquad (4)$$

Im Stand der Technik sind zudem Radprüfstände bekannt, um das Verhalten eines Fahrzeugrades nachzubilden. In diesem Fall wird der Drallsatz mit einem Moment $M_{Fx}$, welches der auf den Untergrund übertragenen Kraft entspricht, und dem Moment $M_{Reib}$, welches der Rollreibung entspricht, zu Gleichung (5) erweitert.

$$J_{Rad} \frac{d\omega}{dt} = M_W - M_{Fx} - M_{Reib} \qquad (5)$$

Diese Ausführungsbeispiele sind selbstverständlich je nach Simulation auf vielfältige Weise abwandelbar.

In Fig. 2 ist schematisch eine Belastungsmaschine 4 gezeigt, welche zur Simulation des in Fig. 1 gezeigten Körpers 1 in Form einer Schwungmasse 2 verwendet wird. Die Belastungsmaschine 4, welche Teil eines (nicht gezeigten) Prüfstands sein kann, weist ein Trägheitsmoment $J_{ist}$ auf, das vom gewünschten Soll-Trägheitsmoment $J_{soll}$ des Körpers 1 abweichen kann. Dies ist beispielsweise dann der Fall, wenn das Trägheitsmoment $J_{soll}$ derart groß oder klein ist, dass eine Belastungsmaschine 4 mit passendem Trägheitsmoment nicht das geforderte Drehmoment liefern bzw. aufnehmen könnte. Um die Abweichung zwischen dem verfügbaren Trägheitsmoment $J_{ist}$ der Belastungsmaschine 4 und jenem des zu simulierenden Körpers 1 auszugleichen, wird die Drehzahl bzw. Geschwindigkeit der Belastungsmaschine 4 entsprechend geregelt. Je nach Regelabweichung zwischen Sollgeschwindigkeit $\omega_{soll}$ und Istgeschwindigkeit $\omega_{ist}$ der Belastungsmaschine 4 wird ein zusätzliches Regelmoment $M_{Reg}$ erzeugt, das an der Belastungsmaschine 4 eingestellt wird, um die Istgeschwindigkeit $\omega_{ist}$ der Sollgeschwindigkeit $\omega_{soll}$ nachzuführen.

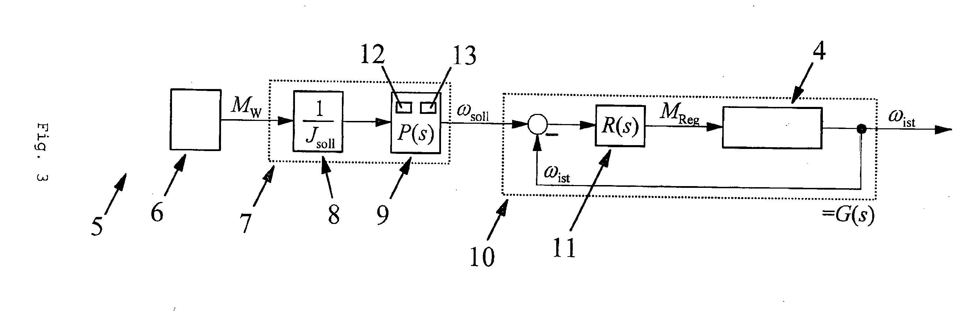

In Fig. 3 ist schematisch das Regelschema der Massensimulation gezeigt, welches in einer Vorrichtung 5 eines (nicht gezeigten) Prüfstands implementiert wird. Die Vorrichtung 5 weist eine Messeinrichtung 6 auf, welche das am Körper 1 wirkende Drehmoment $M_W$ misst. Die Messeinrichtung 6 ist mit einer Rechenvorrichtung 7 verbunden, die ein Modul 8 aufweist, welches das vorgegebene Soll-Trägheitsmoment $J_{soll}$ des Körpers 1 enthält. Die Rechenvorrichtung 7 weist weiters ein Übertragungsglied 9 auf, welches aus dem gemessenen Drehmoment $M_W$ und dem Soll-Trägheitsmoment $J_{soll}$ eine Sollgeschwindigkeit $\omega_{soll}$ bestimmt, die an eine Geschwindigkeitsregeleinrichtung 10 übermittelt wird. Die Geschwindigkeitsregeleinrichtung 10 weist einen Regler 11 auf, welcher anhand einer Regelabweichung zwischen Sollgeschwindigkeit $\omega_{soll}$ und Istgeschwindigkeit $\omega_{ist}$ ein passendes Regelmoment $M_{Reg}$ bestimmt, welches von der Belastungsmaschine 4 aufgebracht wird, um die Istgeschwindigkeit $w_{ist}$ der Sollgeschwindigkeit $\omega_{soll}$ nachzuregeln.

Der Übergang zwischen Sollgeschwindigkeit $\omega_{soll}$ und Istgeschwindigkeit $\omega_{ist}$ der Geschwindigkeitsregelung wird durch eine Regel-Übertragungsfunktion G(s) mit der komplexwertigen Variable s definiert, welche in Gleichung (6) angegeben ist.

$$G(s) = \frac{\omega_{ist}(s)}{\omega_{soll}(s)} \qquad (6)$$

Das dynamische Verhalten der Massensimulation zwischen Eingang (Drehmoment $M_W$) und Ausgang (Istge-

schwindigkeit $\omega_{ist}$) des Regelkreises kann daher aus Gleichung (2) und Gleichung (6) zu Gleichung (7) bestimmt werden.

$$\frac{\omega_{ist}(s)}{M_W(s)} = \frac{1}{J_{soll}\,s}\,G(s) \qquad (7)$$

Wie aus Gleichung (7) ersichtlich, bewirkt die Geschwindigkeitsregelung eine Abweichung zwischen dem simulierten Verhalten gemäß Gleichung (7) und dem realen, nachzubildenden Verhalten der Schwungmasse 2 gemäß Gleichung (2). In anderen Worten "hinkt" die simulierte Masse der realen Masse um die Regel-Übertragungsfunktion G(s) der Geschwindigkeitsregelung hinterher, so dass bei Implementierung der Übertragungsfunktion nach Gleichung (7) dynamische Vorgänge am Prüfstand falsch nachgebildet würden. In bestimmten Anwendungsfällen (zum Beispiel bei einer steifen, schwach gedämpften Anbindung eines zweiten Trägheitsmoments) würde die Massensimulation zudem instabil werden, obwohl das Verhalten des realen Systems stabil wäre.

Um den Einfluss der Geschwindigkeitsregelung auf die Simulation dynamischer Vorgänge zu minimieren bzw. gänzlich auszuschalten, weist das Übertragungsglied 9 eine zur Regel-Übertragungsfunktion G(s) reziprok proportionale Übertragungsfunktion P(s) auf. Das Übertragungsglied 9 weist hierfür ein "1/s"- bzw. Integrierglied 12 und ein zur Regel-Übertragungsfunktion G(s) inverses Kompensationsglied 13 auf. Das Übertragungsglied 9 weist daher eine Übertragungsfunktion P(s) nach Gleichung (8) auf.

$$P(s) = \frac{1}{s\,G(s)} \qquad (8)$$

Somit wird für den Übergang zwischen dem gemessenen Drehmoment $M_W$ und der Istgeschwindigkeit $\omega_{ist}$ eine Übertragungsfunktion $T_{ist}(s)$ nach Gleichung (9) erhalten, welche vorteilhafterweise gerade dem realen Verhalten nach Gleichung (2) entspricht.

$$T_{ist}(s) = \frac{\omega_{ist}(s)}{M_W(s)} = \frac{1}{J_{soll}\,s\,G(s)}\,G(s) = \frac{1}{J_{soll}\,s} \qquad (9)$$

Die Verwendung der Übertragungsfunktion P(s) ermöglicht es daher, die Schwungmassensimulation von der Dynamik der Drehzahl- bzw. Geschwindigkeitsregelung, welche durch die Übertragungsfunktion G(s) bestimmt ist, zu entkoppeln. Somit ist das Kompensationsglied 13 des Übertragungsgliedes 9 dazu eingerichtet, die Dynamik der Geschwindigkeitsregelung zu kompensieren. Die Übertragungsfunktion P(s) des Übertragungsgliedes 9 ersetzt hierfür den bisher verwendeten Integrator, welcher sich aus der Anwendung des Drallsatzes gemäß Gleichung (1) ergibt.

Bei einer Ausführungsvariante weist die Geschwindigkeitsregeleinrichtung 10 eine Regel-Übertragungsfunktion G(s) 1. Grades auf, welche gemäß Gleichung (10) durch - je nach Anwendung frei wählbare - Koeffizienten $a_0$ und $b_0$ bestimmt ist.

$$G(s) = \frac{b_0}{s + a_0} \qquad (10)$$

Hieraus ergibt sich für das Übertragungsglied 9 die in Gleichung (11) wiedergegebene Übertragungsfunktion P(s).

$$P(s) = \frac{1}{s\,G(s)} = \frac{s + a_0}{b_0\,s} = \frac{1}{b_0} + \frac{a_0}{b_0}\frac{1}{s} \qquad (11)$$

Wie aus Gleichung (11) unmittelbar entnommen werden kann, entspricht die Übertragungsfunktion P(s) im Wesentlichen jener eines einfachen PI-Reglers, so dass die Rechenvorrichtung 7 vorteilhafterweise aus kostengünstigen, einfach zu implementierenden Standardmodulen aufgebaut werden kann.

Bei einer alternativen Ausführungsform weist die Geschwindigkeitsregelung eine Übertragungsfunktion 2. Grades auf, welche gemäß Gleichung (12) in allgemeiner Form mit - je nach Anwendung frei wählbaren - Koeffizienten $a_0$, $a_1$, $b_0$, $b_1$ definiert wird.

$$G(s) = \frac{b_1 s + b_0}{s^2 + a_1 s + a_0} \qquad (12)$$

Hieraus ergibt sich eine Übertragungsfunktion P(s) des Übertragungsgliedes 9 nach Gleichung (13).

$$P(s) = \frac{1}{sG(s)} = \frac{s^2 + a_1 s + a_0}{b_1 s^2 + b_0 s} \qquad (13)$$

Die vorstehend am Beispiel eines rotierenden Körpers 1 erläuterte Massensimulation ist analog auf translatorisch bewegte Körper anwendbar, wobei sich die zugrundeliegenden Rechenmodelle lediglich durch die Verwendung entsprechender physikalischer Größen (Masse statt Trägheitsmoment, Beschleunigung statt Winkelbeschleunigung, etc.) unterscheiden.

**Patentansprüche**

1. Verfahren zur Simulation eines translatorisch oder rotatorisch bewegten Körpers (1), wobei eine am Körper (1) wirkende Kraft bzw. ein am Körper (1) wirkendes Drehmoment ($M_w$) erfasst wird und dem Körper (1) eine Soll-Masse bzw. ein Soll-Trägheitsmoment ($J_{soll}$) zugeordnet wird, wobei die Kraft bzw. das Drehmoment ($M_w$) und die Soll-Masse bzw. das Soll-Trägheitsmoment ($J_{soll}$) zur Bestimmung einer Sollgeschwindigkeit ($\omega_{soll}$) für eine Geschwindigkeitsregelung herangezogen werden, welche eine Istgeschwindigkeit ($\omega_{ist}$) mit einer Regel-Übertragungsfunktion (G(s)) regelt, **dadurch gekennzeichnet, dass** die Sollgeschwindigkeit ($\omega_{soll}$) mittels eines Übertragungsgliedes (9) mit einer zur Regel-Übertragungsfunktion (G(s)) reziprok proportionalen Übertragungsfunktion (P(s)) bestimmt wird.

2. Verfahren nach Anspruch 1, **dadurch gekennzeichnet, dass** das Übertragungsglied (9) zur Bestimmung der Sollgeschwindigkeit ($\omega_{soll}$) ein Integrierglied (12) und ein zur Regel-Übertragungsfunktion (G(s)) inverses Kompensationsglied (13) aufweist.

3. Verfahren nach Anspruch 1 oder 2, **dadurch gekennzeichnet, dass** die Sollgeschwindigkeit ($\omega_{soll}$) mittels einer zu einer Regel-Übertragungsfunktion n. Grades, insbesondere 1. Grades oder 2. Grades, reziprok proportionalen Übertragungsfunktion (P(s)) bestimmt wird.

4. Verfahren nach Anspruch 3, **dadurch gekennzeichnet, dass** die Übertragungsfunktion (P(s)) des Übertragungsgliedes (9) im Wesentlichen jener eines PI-Reglers entspricht.

5. Verfahren nach einem der Ansprüche 1 bis 4, **dadurch gekennzeichnet, dass** der Körper (1) durch eine Belastungsmaschine (4) zur Nachbildung des dynamischen Verhaltens eines Maschinenelements, insbesondere einer Schwungmasse (2), gebildet wird.

6. Verfahren nach einem der Ansprüche 1 bis 5, **dadurch gekennzeichnet, dass** bei der Drehzahlregelung eine Störgrößenaufschaltung vorgenommen wird.

7. Vorrichtung (5) zur Simulation eines translatorisch oder rotatorisch bewegbaren Körpers (1), mit einer Messeinrichtung (6) zum Messen einer am Körper wirkenden Kraft bzw. eines am Körper wirkenden Drehmoments ($M_w$), die mit einer Rechenvorrichtung (7) verbunden ist, welche dazu eingerichtet ist, aus der gemessenen Kraft bzw. Drehmoment ($M_w$) und einer dem Körper (1) zugeordneten Soll-Masse bzw. Soll-Trägheitsmoment ($J_{soll}$) eine Sollge-

schwindigkeit ($\omega_{soll}$) für eine Geschwindigkeitsregeleinrichtung (10) zu liefern, die einen Regler (11) mit einer Regel-Übertragungsfunktion (G(s)) zum Regeln einer Istgeschwindigkeit ($\omega_{ist}$) aufweist, **dadurch gekennzeichnet, dass** die Rechenvorrichtung (7) zur Bestimmung der Sollgeschwindigkeit ($\omega_{soll}$) ein Übertragungsglied (9) mit einer zur Regel-Übertragungsfunktion (G(s)) reziprok proportionalen Übertragungsfunktion (P(s)) aufweist.

8. Vorrichtung nach Anspruch 7, **dadurch gekennzeichnet, dass** als Körper (1) eine zur Nachbildung des dynamischen Verhaltens eines Maschinenelements, insbesondere einer Schwungmasse (2), eingerichtete Belastungsmaschine (4) vorgesehen ist.

## Claims

1. A method for simulating a body (1) moved in a translational or rotational manner, wherein a force acting on said body (1) or a torque ($M_W$) acting on said body (1) are detected, and a reference mass or a reference moment of inertia ($J_{soll}$) are assigned to said body (1), and wherein said force or torque ($M_w$) and said reference mass or reference moment of inertia ($J_{soll}$) are used to determine a reference speed ($\omega_{soll}$) for speed control controlling the actual speed ($\omega_{ist}$) using a control transmission function (G(s)), **characterized in that** said reference speed ($\omega_{soll}$) is determined by means of a transmission element (9) using a transmission function (P(s)) reciprocally proportional to said control transmission function (G(s)).

2. A method according to claim 1, **characterized in that** said transmission element (9) determining the reference speed ($\omega_{soll}$) has an integrating element (12) and a compensation element (13), which is inverse to said control transmission function (G(s)).

3. A method according to claims 1 or 2, **characterized in that** said reference speed ($\omega_{soll}$) is determined according to a transmission function (P(s)) reciprocally proportional to a control transmission function of the $n^{th}$ degree, particularly the $1^{st}$ or $2^{nd}$ degrees.

4. A method according to claim 3, **characterized in that** said transmission function (P(s)) of said transmission element (9) essentially corresponds to the transmission function of a PI controller.

5. A method according to any one of claims 1 to 4, **characterized in that** a load machine (4) is used as said body (1) to simulate the dynamic behavior of a machine element, particularly a flywheel mass (2).

6. A method according to any one of claims 1 to 5, **characterized in that** the speed control does a feed-forward control.

7. A device (5) for simulating a body (1) movable in a translational or rotational manner, said device having a measuring device (6) for measuring a force acting on said body or a torque ($M_W$) acting on said body, said measuring device (6) being connected to a calculating device (7) designed to derive a reference speed ($\omega_{soll}$) for a speed control device (10) from the measured force or torque ($M_w$) and a reference mass or reference moment of inertia ($J_{soll}$) assigned to said body (1), said speed control device (10) having a control device (11) having a control transmission function (G(s)) to control the actual speed ($\omega_{ist}$), **characterized in that** said calculating device (7) for calculating the reference speed ($\omega_{soll}$) has a transmission element (9) having a transmission function (P(s)) reciprocally proportional to said control transmission function (G(s)).

8. A device according to claim 7, **characterized in that** a load machine (4) is used as said body (1) to simulate the dynamic behavior of a machine element, particularly of a flywheel mass (2).

## Revendications

1. Procédé de simulation d'un corps (1) déplacé par translation ou rotation, dans lequel une force agissant au niveau du corps (1) ou encore un couple ($M_w$) agissant au niveau du corps (1) est détecté(e) et une masse théorique ou encore un moment d'inertie théorique ($J_{soll}$) est associé(e) au corps (1), dans lequel la force ou encore le couple ($M_w$) et la masse théorique ou encore le moment d'inertie théorique ($J_{soll}$) sont pris en compte pour déterminer une vitesse théorique ($\omega_{soll}$) pour un mécanisme de régulation de vitesse, qui régule une vitesse réelle ($\omega_{ist}$) à l'aide d'une fonction de transfert de régulation (G(s)), **caractérisé en ce que** la vitesse théorique ($\omega_{soll}$) est déterminée au moyen d'un organe de transfert (9) à l'aide d'une fonction de transfert (P(s)) réciproquement proportionnelle à la fonction de transfert de régulation (G(s)).

2. Procédé selon la revendication 1, **caractérisé en ce que** l'organe de transfert (9) servant à déterminer la vitesse théorique ($\omega_{soll}$) présente un organe d'intégration (12) et un organe de compensation (13) inverse par rapport à la fonction de transfert de régulation (G(s)).

3. Procédé selon la revendication 1 ou 2, **caractérisé en ce que** la vitesse théorique ($\omega_{soll}$) est déterminée au moyen d'une fonction de transfert (P(s)) réciproquement proportionnelle à une fonction de transfert de régulation du $n^e$ degré, en particulier du $1^{er}$ degré ou du $2^e$ degré.

4. Procédé selon la revendication 3, **caractérisé en ce que** la fonction de transfert (P(s)) de l'organe de transfert (9) correspond essentiellement à celle d'un régulateur PI.

5. Procédé selon l'une quelconque des revendications 1 à 4, **caractérisé en ce que** le corps (1) est formé par une machine de charge (4) servant à reproduire le comportement dynamique d'un élément de machine, en particulier d'une masse d'inertie (2).

6. Procédé selon l'une quelconque des revendications 1 à 5, **caractérisé en ce qu'**une compensation de perturbation est effectuée lors de la régulation de la vitesse de rotation.

7. Dispositif (5) servant à la simulation d'un corps (1) pouvant être déplacé par translation ou rotation, comprenant un système de mesure (6) servant à mesurer une force agissant au niveau du corps ou un couple ($M_w$) agissant au niveau du corps, qui est relié à un dispositif de calcul (7) mis au point pour délivrer, à partir de la force ou du couple ($M_w$) mesuré(e) et à partir d'une masse théorique ou d'un moment d'inertie théorique ($J_{soll}$) associé(e) au corps (1), une vitesse théorique ($\omega_{soll}$) pour un système de régulation de vitesse (10) présentant un régulateur (11) doté d'une fonction de transfert de régulation (G(s)) servant à réguler une vitesse réelle ($\omega_{ist}$), **caractérisé en ce que** le dispositif de calcul (7) servant à déterminer la vitesse théorique ($\omega_{soll}$) présente un organe de transfert (9) doté d'une fonction de transfert (P(s)) réciproquement proportionnelle par rapport à la fonction de transfert de régulation (G(s)).

8. Dispositif selon la revendication 7, **caractérisé en ce qu'**est prévue, en tant que corps (1), une machine de charge (4) mise au point pour reproduire le comportement dynamique d'un élément de machine, en particulier d'une masse centrifuge (2).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4161116 A
- DE 3423694 A1
- DE 102005004632 B3
- DE 3347182 A1
- DE 4427966 A1